# EUROPEAN PATENT APPLICATION

(11) **EP 4 644 211 A1**
(43) Date of publication of application: **05.11.2025**
(21) Application number: 25173096.6
(22) Date of filing: 29.04.2025
(51) Int. Cl.: B62B 3/06, B62B 3/10, B62B 5/00, B65F 3/00, B62B 3/12

(54) **A VEHICLE FOR TRANSPORTING A MINICONTAINER**

(30) Priority: 01.05.2024 NL 2037592
(71) Applicant: Nick Willigenburg Equipment B.V., 3871 MR Hoevelaken (NL)
(72) Inventor: WILLIGENBURG, Dirk Nicolaas Jan, HOEVELAKEN (NL)
(74) Representative: Algemeen Octrooi- en Merkenbureau B.V.

(57) **Abstract**

A vehicle (1) for transporting a minicontainer, preferably a minicontainer (3) according to NEN-EN 840-1:2020, wherein the vehicle is provided with:
- two wheels (5) for supporting and moving the vehicle (1) on a surface;
- a coupling device (7) arranged for allowing the coupling of the vehicle (1) with the minicontainer (3) from a bottom side (9) with a pivot axle (11) of the minicontainer, by means of a pivot movement around an axis of rotation (R1) of the two wheels (5) of the vehicle, wherein the pivot axle of the minicontainer is arranged for pivoting a lid (15) of the minicontainer (3) relative to a base of the minicontainer for providing access to a receiving area of the minicontainer.

## Description

The present invention relates to a vehicle for transporting a minicontainer.

Minicontainers come in different types and sizes, but are usually about 1 meter high and made of high-density polyethylene (HDPE). The appearance of the minicontainers is standardized and results from a European Standard, EN 840. The first part of this standard is about two-wheeled minicontainers; the standard has been adopted in the Netherlands as NEN-EN 840-1:2020, in Belgium as NBN-EN 840-1:2020.

In the Netherlands and Belgium, many households have minicontainers for different types of waste. For example, a green one for vegetable, fruit and garden waste (organic waste), a blue one for paper and cardboard, an orange one for plastic, tin and beverage packaging and a grey one for residual waste.

In the Netherlands, minicontainers are commonly referred to as kliko, after a manufacturer who brought it to the market in the 70s (Klinkenberg and Koster).

The minicontainer, or kliko, can be moved with the two wheels on the bottom of the kliko. By pivoting the kliko around the rotation axis of the wheels, the base of the kliko is released from the ground and can be moved. However, if the kliko is filled, it can be very heavy. Pivoting, which makes it possible to move the kliko, can therefore be an action that is burdensome for the person moving the kliko. Regularly moving heavy klikos can therefore result in the person developing physical complaints, such as back pain, resulting in a risk of (long-term) absenteeism. There is therefore a need for a solution that makes moving heavy klikos less burdensome.

It is an object of the present solution to provide a solution for the above mentioned problem.

The foregoing object is achieved according to a first aspect of the present invention that relates to a vehicle for transporting a minicontainer, preferably a minicontainer according to NEN-EN 840-1:2020, wherein the vehicle is provided with:
- two wheels for supporting and moving the vehicle on a surface;
- a coupling device arranged for allowing the coupling of the vehicle with the minicontainer from a bottom side with a pivot axle of the minicontainer, by means of a pivot movement around an axis of rotation of the two wheels of the vehicle, wherein the pivot axle of the minicontainer is arranged for pivoting of a lid of the minicontainer relative to a base of the minicontainer for providing access to a receiving area of the minicontainer.

With the vehicle according to the first aspect of the present invention a person can move the minicontainer, or kliko, more easily thereby reducing the risk of physical complaints for the person.

In an embodiment, the coupling device is provided at a fixed distance from the axis of rotation of the two wheels. This ensures a more robust and sturdy construction of the vehicle such that the vehicle is also suitable for pivoting and transporting heavy, filled minicontainers, or filled minicontainers weighing 100 kilograms or more.

The coupling device can be provided with a gripping element which is provided with an opening on one side facing away from the axis of rotation of the two wheels for at least partially receiving of the pivot axle into the gripping element.

The opening can also be provided at a fixed distance from the axis of rotation of the two wheels.

In an embodiment, the vehicle is arranged for moving the minicontainer in a forward and a backward direction. The ability to move in both forward and backward direction facilitates the transport of the minicontainer.

The vehicle can comprise a frame which is provided with a support device for supporting against a side wall of the minicontainer. Good support reduces the chance that the minicontainer, especially heavy minicontainers, will be damaged during the transport of the container with the vehicle.

In an embodiment, the vehicle further is provided with at least one support wheel. This provides more control and stability when putting down and/or moving the vehicle.

The at least one support wheel can be arranged to be free of the surface during the coupling of the vehicle with the minicontainer. This allows the vehicle to be tilted at a smaller angle to the surface, which makes it easier to couple the vehicle to the minicontainer.

The at least one support wheel can be further arranged to support in a coupled state of the vehicle with the minicontainer during the transport of the minicontainer by the vehicle, the vehicle together with the two wheels on the surface. This has the advantage that it provides extra support to the person moving the minicontainer and thus facilitates the transport of the minicontainer

In an embodiment, an axis of rotation of the at least one support wheel is at a fixed position relative to the axis of rotation of the two wheels. During the transport of, in particular, heavy minicontainers, the at least one support wheel can be subjected to considerable loads. The fact that the at least one support wheel is in a fixed position relative to the axis of rotation of the two wheels of the vehicle provides a more robust and sturdy construction that allows the at least one support wheel to withstand a higher load, thus extending the life of the vehicle.

In an embodiment, the vehicle is provided with a drive for powering the two wheels for moving the vehicle on the surface. The advantage of a drive is that it further facilitates the transport of the minicontainers.

Preferably, the drive comprises an electric motor and a battery for powering the electric motor. An electric motor is relatively compact and quiet and has fewer moving parts compared to an internal combustion engine, making it less susceptible to wear and tear and requiring less frequent maintenance. The battery has the advantage that the vehicle can be used wirelessly.

The vehicle can be arranged to couple solely by means of the coupling device to the minicontainer, preferably wherein the vehicle is arranged to solely couple by means of the pivot axle of the minicontainer. This reduces the chance of incorrect coupling or incorrect use of the vehicle with the minicontainer, which reduces the risk of damage to the vehicle or to the minicontainer.

In an embodiment, the vehicle is arranged to support and move the minicontainer on the surface during the transport of the minicontainer by the vehicle with wheels of the minicontainer. This simplifies the movement of the minicontainer with the vehicle. In addition, this extends the life of the vehicle, because the minicontainer rests at least partly with the wheels of the minicontainer on the ground such that the entire weight of the minicontainer is not carried by the vehicle

In an embodiment, the vehicle is arranged to move the minicontainer from an upright position to a tilted position during coupling.

The present invention is described below with reference to the attached drawings showing embodiments of the present invention and in which identical reference figures indicate the same or similar elements. The invention is by no means limited to the embodiments described therein.
Fig.1 shows a vehicle according to the present invention;
Fig. 2 shows the coupling of a vehicle according to the present invention with a minicontainer;
Fig. 3 shows the transport of a vehicle according to the present invention with a minicontainer attached.

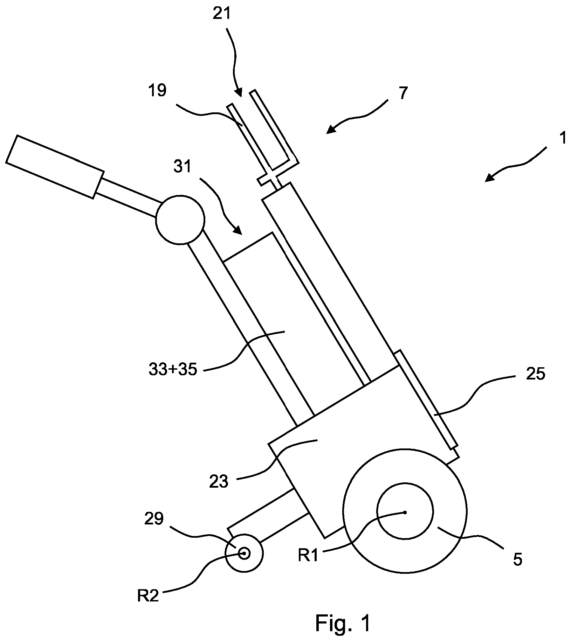

In Fig. 1, a vehicle 1 for transporting a minicontainer 3 according to the present invention is shown. Preferably, the minicontainer 3 is in accordance with the NEN-EN 840-1:2020 standard. Vehicle 1 is equipped with two wheels 5, one of which is visible in Fig. 1, for supporting and moving vehicle 1 on a surface. The vehicle 1 is further provided with a coupling device 7, wherein the coupling device 7 is provided at a fixed distance from an axis of rotation R1 of the two wheels 5. The coupling device 7 is provided with a gripping element 19 which is provided with an opening 21 on a side facing away from the axis of rotation R1 of the two wheels 5 for at least partially receiving of the pivot axle 11 of the minicontainer 3 into the gripping element 19, wherein the opening 21 is provided at a fixed distance from the axis of rotation R1 of the two wheels 5.

The vehicle 1 as shown in Fig. 1 also comprises a frame 23 which is provided a support device 25. The support device 25 is for support against a side wall 27 of the minicontainer 3. Furthermore, vehicle 1 of Fig. 1 is provided with
a support wheel 29. The man skilled in the art will understand that the vehicle 1 can also be provided with more than one support wheel 29, such as two or three support wheels 29. The support wheel has an axis of rotation R2 that at a fixed position relative to 30 of the axis of rotation R1 of the two wheels 5.

Fig. 1 further shows that vehicle 1 is provided with a drive 31 for driving the two wheels 5 for moving vehicle 1 on the surface. The drive 31 includes an electric motor 33 and a battery 35 for powering the electric motor 33.

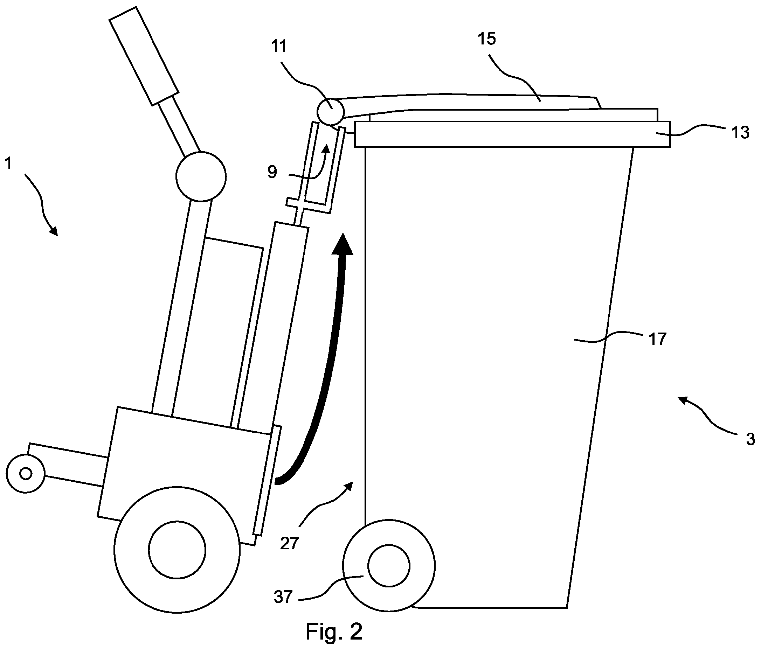

As shown in Fig. 2, the coupling device 7 is arranged to allow, by means of a pivot movement around an axis of rotation R1 of the two wheels 5 of the vehicle 1 (indicated by the black arrow), from a bottom side 9 with a pivot axle 11 of the minicontainer 3 the coupling of the vehicle 1 with the minicontainer 3, wherein the pivot axle 11 of the minicontainer 3 is arranged for pivoting a lid 15 of the minicontainer 3 of the minicontainer relative to a base 13 of the minicontainer to provide access to a receiving area 17 of the minicontainer 3. In this manner, an user 39 can couple the vehicle 1 to the minicontainer 3 without having to lift the minicontainer 3 off the surface. In other words, the minicontainer 3 remains resting on the surface by means of its wheels 37.

It also follows from Fig. 2 that the support wheel 29 is arranged to be free of the surface during the coupling of the vehicle 1 with the minicontainer 3.

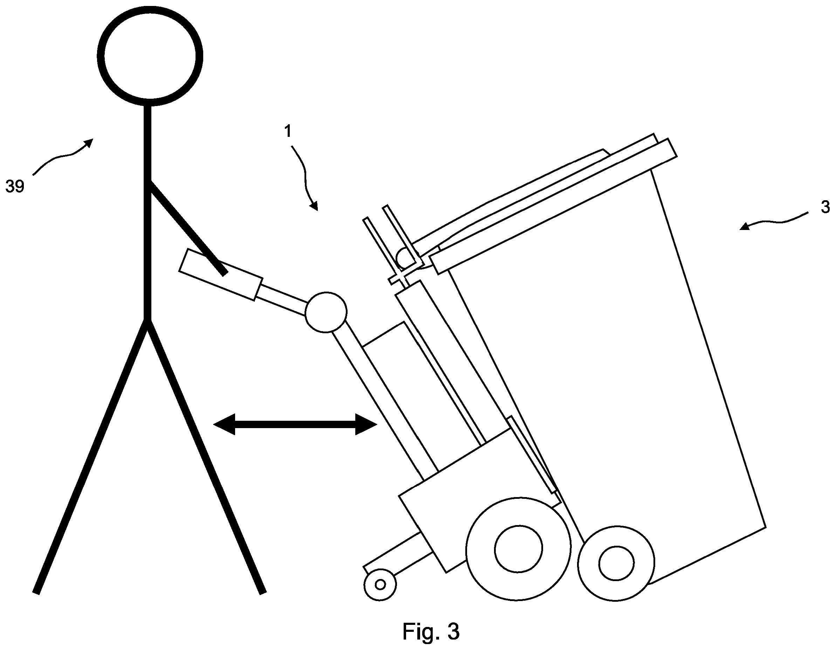

In Fig. 3 it is shown that vehicle 1, coupled with a minicontainer 3, is arranged for moving the minicontainer 3 in a forward and a backward direction by the user 39. Fig. 3 also shows that the support wheel 29 is further arranged to support in a coupled state of the vehicle 1 with the minicontainer 3 during the transport of the minicontainer 3 by the vehicle 1, the vehicle 1 together with the two wheels 3 on the surface. Furthermore, the vehicle 1 is arranged to support and move the minicontainer 3 on the surface during the transport of the minicontainer 3 by the vehicle 1 with wheels 37 of the minicontainer 3.

It follows from Fig. 2 and 3 that the vehicle 1 is arranged to move the minicontainer 3 from an upright position (shown in Fig. 2) to a tilted position (shown in Fig. 3) during coupling. Fig. 2 and 3 further show that the vehicle 1 is arranged to, preferably solely, couple by means of the pivot axle 11 of the minicontainer 3.

Other variations of the revealed embodiments can be understood and effected by technical experts in the practice of the claimed invention, from a study of the drawings, the disclosure and the attached claims. In the claims, the word "comprising" does not exclude other elements or steps, and the indefinite article "a" does not exclude a multiplicity. The mere fact that certain measures are mentioned in different interdependent claims does not mean that a combination of these measurements cannot be used to an advantage. Any reference marks in the claims should not be interpreted as limiting their scope.

The foregoing description provides embodiments of the invention by way of example only. The scope of the present invention is defined by the attached conclusions. One or more of the objectives of the invention are achieved by the attached conclusions.

## Claims

1. A vehicle (1) for transporting a minicontainer (3), preferably a minicontainer (3) according to NEN-EN 840-1:2020, wherein the vehicle (1) is provided with:
- two wheels (5) for supporting and moving the vehicle (1) on a surface;
- a coupling device (7) arranged for allowing the coupling of the vehicle (1) with the minicontainer (3) from a bottom side (9) with a pivot axle (11) of the minicontainer (3), by means of a pivot movement around an axis of rotation (R1) of the two wheels (5) of the vehicle (1), wherein the pivot axle (11) of the minicontainer (3) is arranged for pivoting of a lid (15) of the minicontainer (3) relative to a base (13) of the minicontainer (3) for providing access to a receiving area (17) of the minicontainer (3).

2. The vehicle (1) according to claim 1, wherein the coupling device (7) is provided at a fixed distance from the axis of rotation (R1) of the two wheels (5).

3. The vehicle (1) according to claim 1 or 2, wherein the coupling device (7) is provided with a gripping element (19) which is provided with an opening (21) on a side facing away from the axis of rotation (R1) of the two wheels (5) for at least partially receiving of the pivot axle (11) into the gripping element (19).

4. The vehicle (1) according to claim 3, wherein the opening (21) is provided at a fixed distance from the axis of rotation (R1) of the two wheels (5).

5. The vehicle (1) according to any of the preceding claims, wherein the vehicle (1) is arranged for moving the minicontainer (3) in a forward and a backward direction.

6. The vehicle (1) according to any of the preceding claims, wherein the vehicle (1) comprises a frame (23) which is provided with a support device (25) for supporting against a side wall (27) of the minicontainer (3).

7. The vehicle (1) according to any of the preceding claims, wherein the vehicle (1) further is provided with at least one support wheel (29).

8. The vehicle (1) according to claim 7, wherein the at least one support wheel (29) is arranged to be free of the surface during the coupling of the vehicle (1) with the minicontainer (3).

9. The vehicle (1) according to claim 7 or 8, wherein the at least one support wheel (29) is further arranged to support in a coupled state of the vehicle (1) with the minicontainer (3) during the transport of the minicontainer (3) by the vehicle (1), the vehicle (1) together with the two wheels (3) on the surface.

10. The vehicle (1) according to one of the claims 7-9, wherein an axis of rotation (R2) of the at least one support wheel (29) is at a fixed position relative to the axis of rotation (R1) of the two wheels (5).

11. The vehicle (1) according to any of the preceding claims, wherein the vehicle (1) is provided with a drive (31) for powering the two wheels (5) for moving the vehicle (1) on the surface.

12. The vehicle (1) according to claim 11, wherein the drive (31) comprises an electric motor (33) and a battery (35) for powering the electric motor (33).

13. The vehicle (1) according to any of the preceding claims, wherein the vehicle (1) is arranged to couple solely by means of the coupling device (7) to the minicontainer (3), preferably wherein the vehicle (1) is arranged to solely couple by means of the pivot axle (11) of the minicontainer (3).

14. The vehicle (1) according to any of the preceding claims, wherein the vehicle (1) is arranged to support and move the minicontainer (3) on the surface during the transport of the minicontainer (3) by the vehicle (1) with wheels (37) of the minicontainer (3).

15. The vehicle (1) according to any of the preceding claims, wherein the vehicle (1) is arranged to move the minicontainer (3) from an upright position to a tilted position during coupling.
